# EUROPÄISCHE PATENTANMELDUNG

(11) **EP 4 353 653 A1**
(43) Veröffentlichungstag der Anmeldung: **17.04.2024**
(21) Anmeldenummer: 22200510.0
(22) Anmeldetag: 10.10.2022
(51) Int. Cl.: B66B 23/00, E04B 1/19, F16B 7/18

(54) **LASTAUFNAHMEVORRICHTUNG ZUR AUFNAHME EINER LAST AN EINEM PROFIL, INSBESONDERE BEI EINER FAHRWEGVORRICHTUNG**

(71) Anmelder: TK Elevator Innovation and Operations GmbH, 40472 Düsseldorf (DE)
(72) Erfinder: RÖPER, Jonas, 21073 Hamburg (DE)
(74) Vertreter: Michalski Hüttermann & Partner Patentanwälte mbB

(57) **Zusammenfassung**

Die vorliegende Erfindung betrifft eine Lastaufnahmevorrichtung (30) zur Aufnahme einer Last an einem Profil (31), insbesondere an einem Obergurt (4.1) oder Untergurt (4.2) einer Fahrwegvorrichtung (1), die Lastaufnahmevorrichtung (30) aufweisend das Profil (31) mit zumindest einer ersten Wandung (31.1) und einer winkelig, insbesondere rechtwinkelig, mit der ersten Wandung (31.1) verbundenen zweiten Wandung (31.2) und ein Verbindungsstück (32) mit einem ersten Abschnitt (32.1)und einem zweiten Abschnitt (32.2), wobei das Profil (31) an der zweiten Wandung (31.2) unmittelbar unterhalb der ersten Wandung (31.1) eine parallel zu der ersten Wandung (31.1) fluchtende erste Ausnehmung (33.1) aufweist, wobei das Verbindungsstück (32) mit dem ersten Abschnitt (32.1) die erste Ausnehmung (33.1) durchgreift und an der ersten Wandung (31.1) von innerhalb des Profils (31) anliegt, wobei der erste Abschnitt (32.1) mit der ersten Wandung (31.1) verbindbar ist und wobei das Verbindungsstück (32) an dem außerhalb des Profils (31) liegenden zweiten Abschnitt (32.2) eine Lastaufnahme aufweist.

## Beschreibung

### Technisches Gebiet

Die vorliegende Erfindung betrifft eine Lastaufnahmevorrichtung zur Aufnahme einer Last an einem Profil, insbesondere an einem Obergurt oder Untergurt einer Tragstruktur für eine Fahrwegvorrichtung, die Lastaufnahmevorrichtung aufweisend das Profil mit zumindest einer ersten Wandung und einer winkelig, insbesondere rechtwinkelig, mit der ersten Wandung verbundenen zweiten Wandung und ein Verbindungsstück. Die Erfindung betrifft weiterhin ein entsprechendes Profil sowie ein entsprechendes Verbindungsstück. Des Weiteren betrifft die Erfindung eine Tragstruktur für eine Fahrwegvorrichtung, insbesondere eine Fahrtreppenvorrichtung, ein Längsabschnittsmodul einer modulweise zusammenbaubaren Fahrwegvorrichtung mit einer solchen Tragstruktur und eine entsprechende Fahrwegvorrichtung.

### Hintergrund der Erfindung

Aus dem Stand der Technik ist es bekannt, bei Fahrwegvorrichtungen Tragstrukturen vorzusehen, die das äußere Tragwerk für Komponenten der Fahrwegvorrichtung, wie etwa Führungen mit darin einliegenden Stufen/Paletten, Antriebe und Elektrik sowie für Anbau- und Verkleidungselemente wie etwa eine Kammplatte, bilden und üblicherweise aus zwei sich gegenüberliegenden und über Querträger verbundene Seitenwandeinheiten gebildet sind. Die Seitenwandeinheiten weisen dabei üblicherweise als Strukturelemente miteinander verschweißte Profile auf, aus denen fachwerkartige Seitenwände und ein Ober- sowie ein Untergurt ausgebildet sind.

Nachteilig weisen solche Tragstrukturen relativ große Fertigungstoleranzen auf, die insbesondere durch das Schweißen der Profile bedingt sind. Komponenten der Fahrwegvorrichtung, die an der Tragstruktur befestigt werden, müssen daher durch nachteilig sehr aufwändige Verfahren mit entsprechenden Montagehilfsmitteln positioniert und/oder ausgerichtet werden, bevor sie an der Tragstruktur befestigt werden.

Dazu sind entsprechende Befestigungsmittel für eine variable Positionierung/Ausrichtung der Komponente gegenüber der Tragstruktur ausgebildet und/oder müssen nach dem Positionieren und/oder Ausrichten erst aufwändig händisch geschaffen werden.

Aus EP 1 655 260 A1 ist beispielsweise eine Fahrwegvorrichtung bekannt, bei der zum Positionieren einer Kammplatte an der Tragstruktur eine Lastaufnahme mit einstellbarer Höhe der Kammplatte vorgesehen ist. Die Kammplatte muss aufwändig mittels einer Lehre in der Breite positioniert werden.

### Beschreibung der Erfindung

Ausgehend von dieser Situation ist es eine Aufgabe der vorliegenden Erfindung, eine vereinfachte und sichere Positionierung/Ausrichtung von Komponenten einer Fahrwegvorrichtung an der Tragstruktur zu ermöglichen.

Die Aufgabe der Erfindung wird durch die Merkmale der unabhängigen Hauptansprüche gelöst. Vorteilhafte Ausgestaltungen sind in den Unteransprüchen angegeben. Sofern technisch möglich, können die Lehren der Unteransprüche beliebig mit den Lehren der Haupt- und Unteransprüche kombiniert werden.

Insbesondere wird die Aufgabe demnach gelöst durch eine Lastaufnahmevorrichtung zur Aufnahme einer Last an einem Profil, insbesondere an einem Obergurt oder Untergurt einer Tragstruktur für eine Fahrwegvorrichtung, die Lastaufnahmevorrichtung aufweisend das Profil mit zumindest einer ersten Wandung und einer winkelig, insbesondere rechtwinkelig, mit der ersten Wandung verbundenen zweiten Wandung, und ein Verbindungsstück mit einem ersten Abschnitt und einem zweiten Abschnitt, wobei das Profil an der zweiten Wandung unmittelbar unterhalb der ersten Wandung eine parallel zu der ersten Wandung fluchtende erste Ausnehmung aufweist, wobei das Verbindungsstück mit dem ersten Abschnitt die erste Ausnehmung durchgreift und an der ersten Wandung von innerhalb des Profils anliegt, wobei der erste Abschnitt mit der ersten Wandung verbindbar ist und wobei das Verbindungsstück an dem außerhalb des Profils liegenden zweiten Abschnitt eine Lastaufnahme aufweist.

Nachfolgend werden vorteilige Aspekte der beanspruchten Erfindung erläutert und weiter nachfolgend bevorzugte modifizierte Ausführungsformen der Erfindung beschrieben. Erläuterungen, insbesondere zu Vorteilen und Definitionen von Merkmalen, sind dem Grunde nach beschreibende und bevorzugte, jedoch nicht limitierende Beispiele. Sofern eine Erläuterung limitierend ist, wird dies ausdrücklich erwähnt.

Soweit Elemente mit Hilfe einer Nummerierung bezeichnet sind, also beispielsweise "erstes Element", "zweites Element" und "drittes Element", so ist diese Nummerierung rein zur Differenzierung in der Bezeichnung vorgesehen und stellt keine Abhängigkeit der Elemente voneinander oder eine zwingende Reihenfolge der Elemente dar. Das heißt insbesondere, dass beispielsweise ein eine Vorrichtung oder ein Verfahren nicht ein "erstes Element" aufweisen muss, um ein "zweites Element" aufweisen zu können. Auch kann die Vorrichtung bzw. das Verfahren ein "erstes Element", sowie ein "drittes Element" aufweisen, ohne aber zwangsläufig ein "zweites Element" aufzuweisen. Es können auch mehrere Einheiten eines Elements einer einzelnen Nummerierung vorgesehen sein, also beispielsweise mehrere "erste Elemente".

Eine Lastaufnahmevorrichtung umfasst im Sinne der vorliegenden Offenbarung beispielsweise ein als Profil, insbesondere als Hohlprofil ausgebildetes Strukturelement bzw. einen als Profil ausgebildeten Strukturabschnitt einer Tragstruktur sowie weitere Teile zum Ausbilden einer mit dem Strukturelement/-abschnitt verbundenen Lastaufnahme. Insbesondere ist die Lastaufnahme durch ein mit dem Strukturelement/- abschnitt lastfest, insbesondere lösbar lastfest, verbundenen Verbindungsstück ausgebildet. Als lastfest wird dabei verstanden, dass über die Verbindung Kräfte und Momenten zumindest in den für einen üblichen Lastfall relevanten Richtungen sicher übertragbar sind. Insbesondere ist zudem das Verbindungsstück selbst ausreichend fest zum Übertragen von für einen üblichen Lastfall relevanten Kräften und/oder Momenten ausgebildet. Die Erfindung betrifft bezüglich der Lastaufnahmevorrichtung insbesondere Aspekte, die auf die Wechselwirkung zwischen den umfassten Komponenten gerichtet sind.

Als Verbindungsstück wird ein an dem Strukturelement/-abschnitt lastfest angeordnetes bzw. anordnenbares Teil verstanden, das eine Lastaufnahme zur Verfügung stellt. Die Lastaufnahme ist dabei insbesondere in einer Art ausgebildet und/oder positioniert, wie es an dem Strukturelement/-abschnitt selbst nicht oder nicht gleichermaßen vorteilhaft möglich wäre, beispielsweise mechanisch besonders steif, mit einem Versatz zu dem Strukturelement/-abschnitt und/oder mit der Möglichkeit einer variablen Positionierung der Komponente. Eine Lastaufnahme ist beispielsweise als Ausnehmung und/oder Vorsprung ausgebildet und zur lastfesten, insbesondere lösbar lastfesten Aufnahme der Last mittels Form-, Kraft- oder Materialschluss ausgebildet.

Eine Ausnehmung "fluchtet" mit einer Richtung insbesondere dann, wenn innere Konturen der Ausnehmung parallel zu dieser Richtung verlaufen. Ein die Ausnehmung durchgreifendes Bauteil kann dann in dieser Richtung die Ausnehmung ohne Hinderung durchgreifen und liegt insbesondere an den inneren Konturen an. Besonders bevorzugt ist durch das Anliegen des Bauteils an der inneren Kontur bereits eine momentenfeste Lagerung des Bauteils in der Ausnehmung erreicht.

Im Sinne der vorliegenden Offenbarung bezieht sich der allgemeine Begriff "Fahrwegvorrichtung" vornehmlich auf Fahrtreppenvorrichtungen und Fahrsteigvorrichtungen (letztere insbesondere in stufenloser Ausgestaltung in zumindest annähernd ebener Ausrichtung oder bei vernachlässigbarer Steigung) sowie artverwandte Personentransporteinrichtungen mit endlos umlaufender Transporteinrichtung. Eine Fahrwegvorrichtung umfasst dabei beispielsweise die Transporteinrichtung bildende Segmente oder Einheiten, insbesondere Stufen oder Paletten, welche mit angetriebenen Ketten oder vergleichbaren Triebmitteln verbunden und in Führungen geführt sind. Die Führungen sowie eine/die Kette (oder ein vergleichbar wirkendes Zugmittel) und weitere Komponenten der Fahrwegvorrichtung werden beispielsweise innerhalb von sich in Längsrichtung im Wesentlichen seitlich davon erstreckenden lasttragenden Konstruktionen bzw. Tragstrukturen gehalten, die zumeist aus zwei sich gegenüberliegenden und über Querträger und wahlweise auch eine Bodeneinheit miteinander verbundenen Seitenwandeinheiten gebildet sind und auch fachwerkartig angeordnete Streben umfassen können. Der Begriff "Fahrwegvorrichtung" bezieht sich weiterhin insbesondere auf modular aufgebaute Fahrwegvorrichtungen, die aus mehreren Längsabschnitten bzw. Längsabschnittsmodulen mit jeweils individueller bzw. individuell erstellter Tragstruktur modular aufgebaut und modulweise zusammengebaut/montierbar sind.

Die Tragstruktur der Fahrwegvorrichtung bzw. des jeweiligen Moduls ist dabei bevorzugt im Wesentlichen durch sich gegenüberliegende Seitenwandeinheiten und diese verbindende Querträger (auch als Querriegel bezeichnet) gebildet, wobei eine jeweilige Seitenwandeinheit durch zumindest eine Seitenwand sowie insbesondere durch einen Obergurt und/oder einen Untergurt gebildet ist. Der hier beschriebene modulweise Herstellungsvorgang kann dabei auch die Verbindung einer Bodeneinheit mit den Seitenwandeinheiten umfassen, es hat sich jedoch gezeigt, dass eine solche Bodeneinheit nicht notwendigerweise eine Tragfunktion erfüllen muss, sondern z.B. hinsichtlich der Funktion ausgestaltet ist, Öl eines/des Antriebs aufzufangen und gegebenenfalls abzuleiten, oder in Hinblick auf eine Abdeckung und/oder Zugänglichkeit von unten zur Tragstruktur bzw. zur Fahrwegvorrichtung optimiert ausgestaltet ist; insofern ist die Bodeneinheit als eine optionale Baueinheit zu verstehen, welche funktional auch separat von der Tragstruktur vorgesehen sein kann, welche optional jedoch auch eine zusätzlich unterstützende lasttragende Funktion übernehmen kann, falls in Einzelfällen gewünscht.

Der Begriff "Seitenwand" bezieht sich auf eine Seitenstruktur, die beispielsweise zumindest abschnittsweise flächig in nur einer Seitenebene verläuft, jedoch alternativ oder ergänzend zumindest abschnittsweise durch Profile, Streben oder Träger mit Erstreckung über eine/die Seitenebene hinaus ausgebildet und/oder verstärkt ist. Allgemein ist die Seitenwand aus Strukturelementen bzw. Strukturabschnitte gebildet, die als flächig ausgebildete Strukturabschnitte Kräfte in mehreren Richtungen aufnehmen und/oder als stabförmige bzw. strebenartige Strukturelemente/-abschnitte die jeweiligen Kräfte lediglich entlang der durch die Ausrichtung vorgegebenen Längserstreckung aufnehmen (Zug oder Druck). Die Seitenwand ist also beispielsweise als geschlossene Fläche, als reines Fachwerk oder als Struktur mit Anteilen von geschlossenen Flächen und Anteilen mit Fachwerkstruktur ausgebildet. Wahlweise sind zumindest einzelne der Strukturelemente/-abschnitte der Seitenwand aus Flachmaterial, insbesondere Metallblech gebildet, z.B. strukturell flächige Abschnitte oder versteifende (insbesondere) gebogenen L- oder U-Profilabschnitte im Bereich von Schweißverbindungen zu weiteren Strukturelementen/-abschnitten.

Eine "Seitenwandeinheit" umfasst gemäß Verständnis der vorliegenden Offenbarung die vorbeschriebene Seitenwand sowie als weitere Strukturelemente/-abschnitte dieser Seitenwand zugeordnete Gurte, insbesondere einen Obergurt und einen Untergurt, wobei die Gurte mit der Seitenwand einstückig, integriert oder voneinander separat ausgebildet sein können. Diese Gurte werden alternativ auch als Bänder bezeichnet. Die jeweilige Seitenwand/-einheit kann dabei auch als modulweise bereitgestellte Seitenwand/-einheit zu verstehen sein, je nach Bezugnahme auf eine/die jeweilige Phase des Herstellungsprozesses der einzelnen Module oder der gesamten Fahrwegvorrichtung. Insofern kann der Begriff Seitenwandeinheit die gesamte Seitenstruktur umfassend Ober-und Untergurt bezeichnen, und der Begriff Seitenwand kann die zwischen Ober- und Untergurt angeordnete Seitenstruktur bezeichnen.

Die Begriffe Obergurt und Untergurt, die zusammen auch als Gurte bezeichnet werden, bezeichnen vorliegend sich in Längsrichtung im Bereich einer Oberkante bzw. einer Unterkante der Seitenwand erstreckende Strukturelemente bzw. Strukturabschnitte zum Aufnehmen von Lasten in Längsrichtung der Fahrwegvorrichtung, insbesondere von Biegelasten, die vornehmlich zu Zugbeanspruchungen im Untergurt und zu Druckbeanspruchungen im Obergurt führen. Die Gurte sind dazu bevorzugt als Profile oder Profilabschnitte, insbesondere als L-Profile, U-Profile oder Hohlprofile ausgebildet und weisen somit ein günstiges Flächenträgheitsmoment zur Aufnahme der Biegelasten auf. Die Gurte versteifen also die Tragstruktur und bilden äußere Eckpunkte, wobei wahlweise die Gurte und/oder die Seitenwände zum Befestigen von weiteren Komponenten der Fahrwegvorrichtung dienen. Die Gurte können weiterhin als von der Seitenwand separate Bauteile ausgebildet sein; bevorzugt ist jedoch zumindest ein Teil der Gurte einstückig mit der Seitenwand, beispielsweise durch Biegen der Seitenwand ausgebildet. Besonders bevorzugt ist der Obergurt als Hohlprofil mit vier Wandungen ausgebildet, wobei zwei Wandungen von der L-förmig gebogenen, in diesem Bereich aus Flachmaterial hergestellten Seitenwand und zwei weitere der Wandungen von einem ebenfalls L-förmig gebogenen und von der Seitenwand separaten Flachmaterialbauteil gebildet sind. Weiterhin bevorzugt ist in ähnlicher Weise der Untergurt als Hohlprofil mit vier Wandungen ausgebildet, wobei zwei Wandungen von der L-förmig gebogenen, in diesem Bereich aus Flachmaterial hergestellten Seitenwand und zwei Wandungen von der ebenfalls L-förmig gebogenen, in diesem Bereich aus Flachmaterial hergestellten Bodeneinheit gebildet sind. Die die Wandungen bildenden Komponenten sind dabei bevorzugt miteinander verschweißt. Der Obergurt und/oder der Untergurt können auch gänzlich einstückig mit der Seitenwand oder gänzlich separat von der Seitenwand bereitgestellt sein (insbesondere auch im Sinne einer prozessualen Variation).

Als Hohlprofil wird ein solches Profil verstanden, dass im Querschnitt zumindest einen von Wandungen im Wesentlichen umschlossenen Bereich aufweist. In diesem Bereich des Querschnitts liegen sich dementsprechend zumindest zwei Wandungen gegenüber, sodass die Zugänglichkeit einer jeweiligen Wandung von der der anderen Wandung zugewandten Seite eingeschränkt ist. Ein Profil, insbesondere ein Hohlprofil, ist beispielsweise aus einem Metallwerkstoff oder einem Kunststoff ausgebildet und weiterhin beispielsweise mittels Extrusion oder als Walzprofil hergestellt.

Der allgemeine Begriff "Komponenten" betrifft sämtliche Teile der jeweiligen Fahrwegvorrichtungen, insbesondere die Tragstruktur oder Teile davon und in der Fahrwegvorrichtung bzw. den jeweiligen Modulen der Fahrwegvorrichtung zu montierende Elemente z.B. betreffend Elektrik, Antrieb, Führung, Anbau-/Verkleidungselemente wie etwa eine Kammplatte oder dergleichen.

Die vorgenannte Lösung der Aufgabe mit einer Lastaufnahmevorrichtung umfasst nun die Lehre, dass an der zweiten Wandung des Profils eine erste Ausnehmung geschaffen ist, durch die das Verbindungsstück derart eingreifen kann, dass es an der ersten Wandung des Profils anliegt. Das Verbindungsstück ist dann insbesondere an der ersten Wandung und/oder in der ersten formschlüssig und/oder durch eine etwaige Verbindung in jeweils zumindest einer Richtung bzw. gegenüber einer Drehachse gehalten, sodass eine lastfeste Verbindung zur sicheren und verteilten Ableitung von an der Lastaufnahme angreifenden Kräften und/oder Momenten in das Profil geschaffen ist. Das Verbindungsstück ist dabei besonders vorteilhaft auf einfache Weise an dem Profil befestigbar und durch die Ausgestaltung der Lastaufnahme zur Aufnahme einer Vielzahl verschiedener Komponenten ausbildbar. Die Lastaufnahme ermöglicht die Aufnahme der Komponenten mit einem durch das Verbindungsstück überbrückten Versatz zu dem Profil. Insbesondere ist die Lastaufnahme dabei so gestaltet, dass die Komponente mittels der Lastaufnahme bereits in zumindest einer Richtung bzw. bezüglich zumindest einer Drehachse an dem Profil ausgerichtet werden kann oder die Komponente ist an der Lastaufnahme derart variabel positionierbar, dass eine Ausrichtung flexibel, beispielsweise mittels eines Hilfsmittels erfolgen kann.

Das Verbindungsstück ist zudem mit geringem Aufwand zu einem beliebigen Zeitpunkt, beispielsweise während des Montageprozesses einer Fahrwegvorrichtung, an dem Profil befestigbar. Auf diese Weise kann beispielsweise eine Hinderung der Montage von weiteren Komponenten durch das an dem Profil angeordnete Verbindungsstück vermieden werden.

In einer Ausführungsform der Lastaufnahmevorrichtung ist die Lastaufnahme als zweite Ausnehmung ausgebildet. Die Aufnahme einer Last erfolgt dann beispielsweise über eine Schraub- oder Nietverbindung, wobei entsprechende Verbindungsmittel die zweite Ausnehmung durchgreifen. Bevorzugt ist die zweite Ausnehmung als Langloch ausgebildet, sodass die Last, beispielsweise eine Kammplatte einer Fahrwegvorrichtung, in einer Raumrichtung variabel an der zweiten Ausnehmung aufnehmbar ist.

Weiterhin bevorzugt weist das Verbindungsstück in dem ersten Abschnitt zumindest eine dritte Ausnehmung zur Aufnahme von Verbindungsmitteln zum Verbinden des Verbindungsstücks mit der ersten Wandung des Profils auf, wobei das Profil in der ersten Wandung zumindest eine vierte Ausnehmung zur Aufnahme der Verbindungsmittel aufweist. Es können dann entsprechende Verbindungsmittel von außerhalb der ersten Wandung, und somit von deren zugänglicher Seite, in der dritten und vierten Ausnehmung eingebracht werden, sodass eine Verbindung des ersten Abschnitts mit der ersten Wandung besonders einfach ermöglicht ist. Bevorzugt weist die dritte Ausnehmung dabei ein Gewinde auf, sodass zum Verbinden des ersten Abschnitts mit der ersten Wandung besonders einfach eine Schraube von außerhalb der ersten Wandung an dem Gewinde eingeschraubt werden kann. Alternativ kann zum Verbinden des ersten Abschnitts mit der ersten Wandung eine Schweiß- oder Klebeverbindung vorgesehen sein.

Weiterhin bevorzugt weist das Profil an der ersten Wandung eine an die erste Ausnehmung angrenzende fünfte Ausnehmung zum Freilegen eines Zugriffsbereichs der zweiten Ausnehmung auf. In dem Zugriffsbereich kann beispielsweise ein Schraubenkopf, eine Mutter, eine Unterlegscheibe oder dergleichen, die über die zweite Ausnehmung seitlich hinausragen und in dem zweiten Abschnitt anliegen, angeordnet werden. Die zweite Ausnehmung ist auf diese Weise für ein parallel zu der zweiten Wandung vorgesehenes Verbindungsmittel besonders nah an dem Profil anordnenbar, sodass die Lastaufnahme unmittelbar an dem Profil erfolgt.

In einer weiteren Ausführungsform weist das Verbindungsstück einen Anschlag zum Anschlagen an der zweiten Wandung von außerhalb des Profils auf. Auf diese Weise ist das Verbindungsstück einerseits sicher an dem Profil positioniert, sodass beispielsweise eine dritte Ausnehmung und eine vierte Ausnehmung sicher miteinander fluchten und die Lastaufnahme sicher positioniert ist. Andererseits ist das Verbindungsstück gegen ein Hindurchrutschen durch die erste Ausnehmung gesichert. Der Anschlag ist insbesondere als Abwinkelung von dem zweiten Abschnitts des Verbindungsstücks ausgebildet. Es ist so ermöglicht, dass durch den Anschlag eine weitere Momentenabstützung des Verbindungsstücks an dem Profil, insbesondere an der zweiten Wandung, erfolgt. Die Lastaufnahmevorrichtung ist dann besonders lastfest ausgebildet.

Besonders bevorzugt ist zumindest eine aus erste Ausnehmung, zweiter Ausnehmung, dritter Ausnehmung, vierter Ausnehmung und/oder fünfter Ausnehmung mittels Laserschneiden ausgebildet. Insofern eine Ausnehmung mittels Laserschneiden bzw. mittels einem Laserschneidwerkzeug ausgebildet wird, so wird das Material durch einen entsprechend ausgerichteten und ausgelegten Laserstrahl durchtrennt. Ein (entsprechendes) Laserschneidwerkzeug ist insbesondere zur Bearbeitung aus einer Richtung ausgebildet, wobei ein Laserkopf senkrecht zu dem Werkstück ausgerichtet und in einer Ebene parallel zu dem Werkstück relativ zu dem Werkstück beweglich ausgebildet ist. Der Laserkopf kann dabei auch von seiner senkrechten Ausrichtung abweichend ausrichtbar sein. Ein Laserschneidwerkzeug kann auch einen räumlich um ein Werkstück, insbesondere das Profil, beweglichen Laserkopf umfassen, wobei besonders vorteilhaft an dem Profil aus einer beliebigen Raumrichtung und unabhängig von der Geometrie des Profils Ausnehmungen einbringbar sind. Zudem ist es möglich, bei einem Profil mit sich gegenüberliegenden Wandungen, etwa einem Hohlprofil, Ausnehmungen in eine Wandung einzubringen, ohne dass der Laserstrahl die in seiner Richtung hinter der Wandung liegende Wandung beschädigt. Das Laserschneiden wird bei Profilen mit sich gegenüberliegenden Wandungen, insbesondere Hohlprofilen, auch als Rohrlaserschneiden bezeichnet.

Durch das Ausbilden einer der Ausnehmungen mittels Laserschneiden ist die betreffende Ausnehmung mit der für das Laserschneiden typischen besonders hohen Präzision/Maßgenauigkeit bzw. mit besonders geringen Toleranzen an dem Profils einbringbar. Die an dem Profil angebrachte Last kann dann mit entsprechender, besonders hoher Maßgenauigkeit an der bzw. durch die Lastaufnahme positioniert und/oder ausgerichtet werden, sodass eine aufwändige Positionierung/Ausrichtung mit entsprechenden Hilfsmittelen vorteilhaft entfällt.

Die Aufgabe wird weiterhin gelöst durch ein Profil, insbesondere ein Hohlprofil, für eine vorbeschriebene Lastaufnahmevorrichtung und durch ein Verbindungsstück für eine vorbeschriebene Lastaufnahmevorrichtung. Sowohl bezüglich des Profils als auch bezüglich des Verbindungsstücks werden durch die Erfindung die bezüglich der Lastaufnahmevorrichtung vorbeschriebenen Vorteile entsprechend erreicht bzw. verwirklicht.

Die Aufgabe wird ebenfalls gelöst durch eine Tragstruktur für eine Fahrwegvorrichtung, insbesondere eine Fahrtreppenvorrichtung, aufweisend zumindest eine Seitenwandeinheit mit einem Obergurt, einem Untergurt und einer sich zwischen Obergurt und Untergurt erstreckenden Seitenwand, wobei zumindest einer aus Obergurt und/oder Untergurt zum Ausbilden einer vorbeschriebenen Lastaufnahmevorrichtung als vorbeschriebenes Profil ausgebildet ist bzw. wobei zumindest einer aus Obergurt und/oder Untergurt mit einem vorbeschriebenen Verbindungsstück eine vorbeschriebene Lastaufnahmevorrichtung bildet. Die bezüglich der Lastaufnahmevorrichtung, bezüglich des Profils und bezüglich des Verbindungsstücks vorbeschriebenen Vorteile werden mit der Tragstruktur entsprechend erreicht bzw. verwirklicht.

Besonders bevorzugt ist/sind bei einer solchen Tragstruktur die erste Wandung und/oder die zweite Wandung einstückig mit der Seitenwand ausgebildet, wobei die erste Ausnehmung, die vierte Ausnehmung und/oder die fünfte Ausnehmung mittels Laserschneiden ausgebildet sind. Dem liegt insbesondere das Konzept zugrunde, dass zumindest ein wesentlicher und die Gesamtform definierender Anteil einer Seitenwand, eines Obergurts, eines Untergurts und/oder die gesamte Seitenwandeinheit aus Flachmaterial, insbesondere Metallblech, ausgebildet ist, wobei an dem Flachmaterial bevorzugt wenigstens ein Referenzpunkt definiert ist/wird. Durch heutzutage für Flachmaterialien verfügbare Bearbeitungsmethoden mit sehr geringen Toleranzen, insbesondere durch die Bearbeitung mittels Laserschneidwerkzeugen, kann im weiteren Verlauf der Montage der Fahrwegvorrichtung auf diesen wenigstens einen Referenzpunkt Bezug genommen werden, sodass die Montage bei sehr kleinen Montagetoleranzen ausführbar ist und die Fahrwegvorrichtung mit vorteilhaft hoher Maßgenauigkeit hergestellt werden kann. Auf diese Weise kann auch das vergleichsweise exakte relative oder absolute Positionieren von einzelnen Komponenten der Fahrwegvorrichtung mit Bezug zum wenigstens einen Referenzpunkt ermöglicht werden, und darüber hinausgehende Maßnahmen zum Ausrichten und Positionieren der Komponenten, insbesondere relativ zueinander, können weitgehend entfallen. Das beschriebene Referenzierungssystem weist weiterhin den Vorteil auf, dass eine gegenüber der üblichen Fachwerkkonstruktion besonders leichte Tragstruktur geschaffen wird.

Ganz besonders bevorzugt umfasst die Erfindung die Lehre, am Flachmaterial neben dem insbesondere in der entsprechenden Seitenwand angeordneten wenigstens einen Referenzpunkt im Zuge der gleichen Bearbeitungsmethode weitere Referenzen, insbesondere entsprechende Ausnehmungen einzubringen (im Sinne von zusätzlichen komponentenspezifischen Montagereferenzpunkten), an denen weitere Komponenten direkt und somit in definierter Positionierung zum wenigstens einen (Master-)Referenzpunkt mit hoher Genauigkeit angeordnet werden können. Die Referenzen werden insbesondere auch in Bereichen des Flachmaterials eingebracht, die im Anschluss an die vorgenannte Bearbeitungsmethode weiteren Bearbeitungsschritten, insbesondere Biegeverfahren, unterzogen werden können, wodurch das hier beschriebene Referenzierungskonzept auch zur mehrdimensionalen Positionierung im Raum bezüglich wenigstens zwei oder aller drei Raumrichtungen umgesetzt werden kann. Weiterhin umfasst die Erfindung die Lehre, dass der Referenzpunkt durch eine z.B. kreisrunde Ausnehmung bzw. durch deren Mittelpunkt definiert wird, an welcher weitere Positioniervorrichtungen (also Montagehilfsmittel wie z.B. Seitenabstützeinheiten) zum Positionieren von einzelnen Längsabschnitten oder Komponenten eingespannt werden können. Insbesondere wird die jeweilige Komponente mit dem Referenzpunkt bzw. das gesamte Modul oder auch die gesamte Fahrwegvorrichtung am wenigstens einen Referenzpunkt angehoben oder um eine durch mehrere Referenzpunkte gebildete Referenzachse gelagert, z.B. auch daran aufgehangen bzw. angehoben oder darum gekippt. Es kann auch zumindest ein wesentlicher Anteil eines Obergurts oder eines Untergurts aus einem Profil gebildet sein, wobei entsprechende Bearbeitungsverfahren, insbesondere Rohrlaserschneidverfahren, zum Ausbilden eines Referenzpunkts und/oder weiterer Referenzen auch für Profile verfügbar sind.

Diesem Konzept entsprechend ist/sind die erste Ausnehmung, die vierte Ausnehmung und/oder die fünfte Ausnehmung mittels dem Laserschneiden mit Bezug zu dem Referenzpunkt ausgebildet und Komponenten der Fahrwegvorrichtung, insbesondere eine Kammplatte, sind mit entsprechender Maßgenauigkeit an der Lastaufnahme positionierbar/ausrichtbar. Insbesondere sind die an der Lastaufnahme aufgenommenen Komponenten somit absolut positionierbar, sowohl gegenüber der Tragstruktur, als auch gegenüber weiteren Komponenten der Fahrwegvorrichtung, die ebenfalls an dem Referenzpunkt positioniert/ausgerichtet wurden bzw. werden. Vorteilhaft ist die Positionierung/Ausrichtung von Komponenten der Fahrwegvorrichtung auf diese Weise stark vereinfacht.

Die Aufgabe wird weiterhin gelöst durch ein Längsabschnittsmodul einer modulweise zusammenbaubaren Fahrwegvorrichtung, insbesondere einer Fahrtreppenvorrichtung, aufweisend eine vorbeschriebene Tragstruktur. Der Begriff "Längsabschnittsmodul" ist im Sinne der vorliegenden Offenbarung allgemein als ein Längsmodul der Fahrwegvorrichtung zu verstehen, d.h. als ein Modul, das einen Längs- oder Längenabschnitt der Fahrwegvorrichtung bildet (also einen zumindest in struktureller Hinsicht vollständigen Bestandteil im entsprechenden Längenbereich). Dieser Begriff umfasst daher die Begriffe "Kopfmodul" und "Zwischenmodul". Der Begriff "Kopfmodul" bezeichnet ein an einem der Enden der Fahrwegvorrichtung angeordnetes Modul und bezieht sich dabei wahlweise auf beide Arten von Kopfmodulen (oberes und unteres Kopfmodul, auch als Oberteil und Unterteil bezeichnet); insofern kann dieser Begriff gleichermaßen das Modul am oberen oder am unteren Ende der Fahrwegvorrichtung bezeichnen. Kopfmodule erstrecken sich üblicherweise über einen/den Neigungswinkel der Fahrwegvorrichtung, überspannen also die Knickstelle bzw. den Übergang vom geneigten Längsabschnitt zum jeweiligen horizontalen Abschnitt. In diesem Zusammenhang bezieht sich der Begriff "Podestabschnitt" auf den in bestimmungsgemäßer Anordnung zumindest annähernd in einer Horizontalebene ausgerichteten Abschnitt des jeweiligen Kopfmoduls; insofern wird bei einer Beschreibung der Anordnung/Ausrichtung des jeweiligen Kopfmoduls auch auf die Ausrichtung dieses Podestabschnitts (bzw. dessen Haupterstreckungsebene) Bezug genommen, insbesondere da bzw. wenn die absolute Länge des Podestabschnitts größer ist als die absolute Länge des Schrägabschnitts. Der Begriff "verbindender Schrägabschnitt", der in der Literatur auch als Stummel bezeichnet wird, ist insbesondere auch als der für das Verbinden/Verheiraten mit einem weiteren Längsabschnittsmodul vorgesehene schräg/geneigt ausgerichtete Abschnitt zu verstehen und kann je nach Funktion des jeweiligen Kopfmoduls mehr oder weniger lang ausgeprägt sein; daraus ergibt sich, dass vorgesehen ist, die einzelnen Module untereinander im Bereich eines/des geneigten Längsabschnitts miteinander zu verbinden. Der allgemeine Begriff "Längsabschnitt" kann dabei wahlweise ein Längsabschnittsmodul oder einen spezifischen Längsabschnitt insbesondere des Kopfmoduls betreffen (also Podestabschnitt oder Schrägabschnitt).

Ein solches Längsabschnittsmodul weist die bezüglich der Lastaufnahmevorrichtung, dem Profil, dem Verbindungsstück und der Tragstruktur vorbeschriebenen Vorteile entsprechend auf. Insbesondere ist bei einem Längsabschnittsmodul vorgesehen, dass als Referenzpunkt ein Verbindungsmittel zum Verbinden des Längsabschnittsmodul mit einem weiteren Längsabschnittsmodul dient oder, dass die erste Ausnehmung, die vierte Ausnehmung und/oder die fünfte Ausnehmung und das Verbindungsmittel auf den gleichen Referenzpunkt bezogen positioniert sind. Das weitere Längsabschnittsmodul kann dann einen entsprechenden absoluten Referenzpunkt aufweisen oder auf einen absoluten Referenzpunkt des Längsabschnittsmoduls referenzieren, wobei auf den absoluten Referenzpunkt bevorzugt auch während der Montage der Fahrwegvorrichtung referenziert wird. Insbesondere sind das Verbindungsmittel und die erste Ausnehmung, die vierte Ausnehmung und/oder die fünfte Ausnehmung mittels Laserschneiden an dem Längsabschnittsmodul eingebracht. Besonders bevorzugt ist das Längsabschnittsmodul als Zwischenmodul zwischen zwei Kopfmodulen ausgebildet.

Die Aufgabe wird weiterhin auch gelöst durch eine Fahrwegvorrichtung, insbesondere Fahrtreppenvorrichtung, aufweisend eine vorbeschriebene Tragstruktur. Insbesondere weist die Fahrwegvorrichtung zumindest ein vorbeschriebenes Längsabschnittsmodul auf. Eine solche Fahrwegvorrichtung weist die bezüglich der Lastaufnahmevorrichtung, des Profils, des Verbindungsstücks, der Tragstruktur und des Längsabschnittmoduls vorbeschriebenen Vorteile entsprechend auf.

### Kurze Beschreibung der Zeichnungen

Nachfolgend wird die Erfindung unter Bezugnahme auf die anliegenden Zeichnungen anhand bevorzugter Ausführungsbeispiele näher erläutert. Die Formulierung Figur ist in den Zeichnungen mit Fig. abgekürzt.

In den Zeichnungen zeigen
- Fig. 1a: eine perspektivische Ansicht einer Lastaufnahmevorrichtung nach einem Aspekt der Erfindung;
- Fig. 1b: eine weitere perspektivische Ansicht der Lastaufnahmevorrichtung gemäß Fig. 1a in Explosionsdarstellung;
- Fig. 2a: eine perspektive Ansicht eines teilweise montierten Kopfmoduls einer modulweise zusammenbaubaren Fahrwegvorrichtung mit einer Tragstruktur;
- Fig. 2b: eine perspektive Ansicht eines teilweise montierten Zwischenmoduls einer modulweise zusammenbaubaren Fahrwegvorrichtung mit einer Tragstruktur;
- Fig. 2c: eine perspektive Ansicht eines weiteren teilweise montierten Kopfmoduls einer modulweise zusammenbaubaren Fahrwegvorrichtung mit einer Tragstruktur; und
- Fig. 2d: eine Detailansicht einer Tragstruktur gemäß Fig. 2a bis 2c.

### Detaillierte Beschreibung der Zeichnungen

Die beschriebenen Ausführungsbeispiele sind lediglich Beispiele, die im Rahmen der Ansprüche auf vielfältige Weise modifiziert und/oder ergänzt werden können. Jedes Merkmal, das für ein bestimmtes Ausführungsbeispiel beschrieben wird, kann eigenständig oder in Kombination mit anderen Merkmalen in einem beliebigen anderen Ausführungsbeispiel genutzt werden. Jedes Merkmal, das für ein Ausführungsbeispiel einer bestimmten Anspruchskategorie beschrieben wird, kann auch in entsprechender Weise in einem Ausführungsbeispiel einer anderen Anspruchskategorie eingesetzt werden.

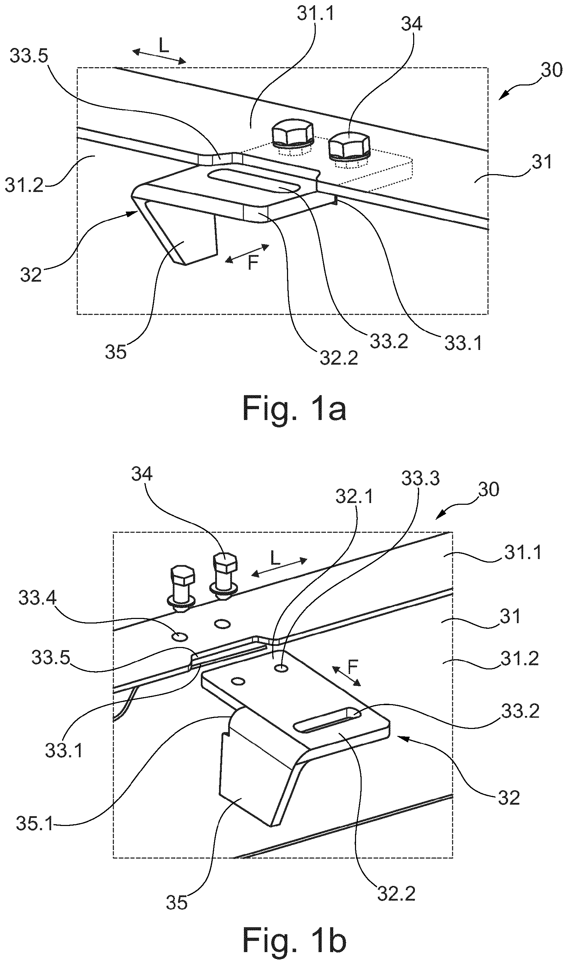

Die Figuren 1a und 1b zeigen eine Lastaufnahmevorrichtung 30 mit einem Profil 31 und einem Verbindungsstück 32. Das Profil 31 weist eine erste Wandung 31.1 und eine rechtwinkelig mit der ersten Wandung 31.1 verbundenen zweiten Wandung 31.2 auf. Das Profil 31 weist weiterhin, jedoch nicht dargestellt, eine dritte Wandung und eine vierte Wandung auf und bildet insofern ein Hohlprofil, beispielsweise als Obergurt 4.1 oder Untergurt 4.2 einer Tragstruktur 2 für eine Fahrwegvorrichtung 1. An der zweiten Wandung 31.2 ist eine erste Ausnehmung 33.1 angeordnet, die in einer Fluchtrichtung F fluchtet. Die Fluchtrichtung F ist parallel zu der ersten Wandung 31.1 ausgerichtet.

Das Verbindungsstück 32 weist einen ersten Abschnitt 32.1 auf, mit dem es die erste Ausnehmung 33.1 durchgreift, sodass der erste Abschnitt 32.1 an einer Innenseite der ersten Wandung 31.1 anliegt. In dem zweiten Abschnitt sind dritte Ausnehmungen 33.3 angeordnet, die mit vierten Ausnehmungen 33.4 in der ersten Wandung 31.1 fluchten und zur Verbindung des Verbindungsstücks 32 mit der ersten Wandung 31.1 mittels Verbindungsmitteln 34 dienen. Dazu ist in den dritten Ausnehmungen 33.3 ein nicht näher dargestelltes Gewinde ausgebildet, in das die Verbindungsmittel 34 eingeschraubt werden.

Das Verbindungsstück weist weiterhin einen zweiten Abschnitt 32.2 auf, in dem eine als Langloch ausgebildete zweite Ausnehmung 33.2 angeordnet ist. Die zweite Ausnehmung 33.2 dient als Lastaufnahme zum Aufnehmen einer Last, beispielsweise in Form einer Komponente, insbesondere einer Kammplatte, einer Fahrwegvorrichtung. Weiterhin ist an dem zweiten Abschnitt 32.2 ein als Abwinkelung ausgebildeter Anschlag 35 angeordnet, durch den der in das Profil 31 eindringende erste Abschnitt 32.1 in seiner Länge bzw. Position gegenüber dem Profil 31 bestimmt ist. Zudem ist durch den Anschlag 35 eine zusätzliche Einleitung einer Kraft und/oder eines Moments in das Profil 31 geschaffen. An einer oberen Kante des Anschlags 35 ist eine Einkerbung 35.1 ausgebildet, mittels der ein Anschlagen an einer zwischen der ersten Wandung 31.1 und der zweiten Wandung 31.2 vorgesehenen, jedoch nicht dargestellten, Schweißnaht vermieden wird, sodass der Anschlag 35 sicher an der zweiten Wandung 31.2 anliegt.

An der ersten Wandung 31.1 ist ferner eine fünfte Ausnehmung 33.5 vorgesehen, die an die erste Ausnehmung 33.1 angrenzt, also mit dieser eine einzelne, sich über die erste Wandung 31.1 und die zweite Wandung 31.2 erstreckende Ausnehmung bildet. Die fünfte Ausnehmung 33.5 dient dazu, dass die zweite Ausnehmung freigelegt ist, wie in Figur 1a dargestellt. An der Oberseite des Verbindungsstücks 32 bzw. des zweiten Abschnitts 32.2, kann dann etwa eine Mutter oder ein Schraubenkopf an der zweiten Ausnehmung 33.2 anliegen, ohne an der ersten Wandung 31.1 anzustoßen oder durch die erste Wandung 31.1 in der Positionierung bzw. Wirkung gehindert zu sein.

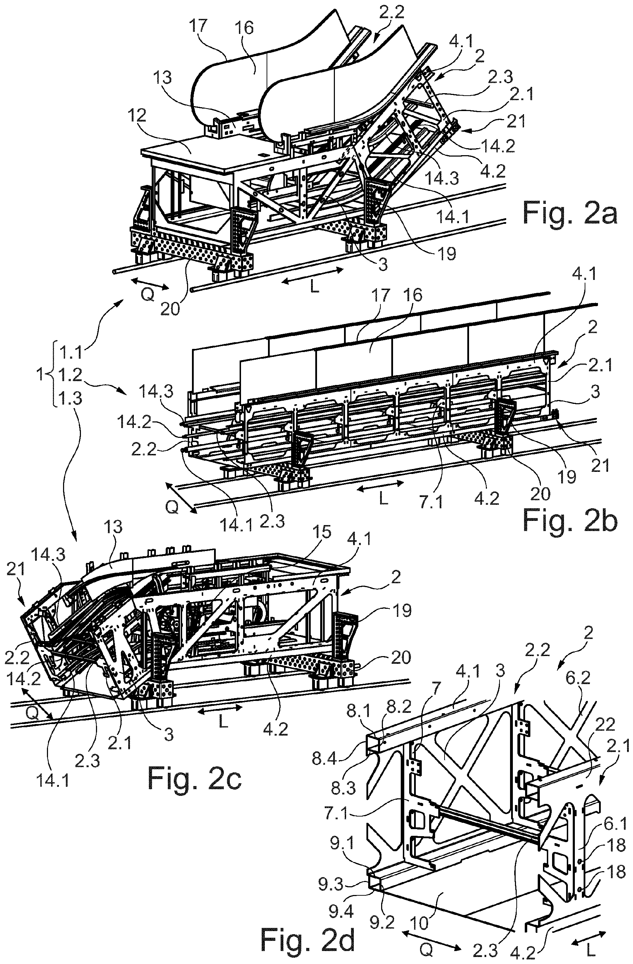

Die Figuren 2a bis 2c zeigen mehrere Längsabschnittsmodule 1.1, 1.2, 1.3 einer modulweise zusammengebauten Fahrwegvorrichtung 1, nämlich Figur 2a ein als unteres Kopfmodul ausgebildetes erstes Längsabschnittsmodul 1.1, Figur 2b ein als Zwischenmodul ausgebildetes zweites Längsabschnittsmodul 1.2 und Figur 2c ein als oberes Kopfmodul ausgebildetes drittes Längsabschnittsmodul 1.3. Die Kopfmodule erstrecken sich dabei über Knickstellen hinaus, bzw. weisen einen abgeknickten Stummel auf. Die Längsabschnittsmodule 1.1, 1.2, 1.3 weisen jeweils eine Tragstruktur 2 mit jeweils zwei sich jeweils hauptsächlich in einer Längsrichtung L erstreckenden Seitenwandeinheiten 2.1, 2.2 und sich in einer Querrichtung Q erstreckenden Querträgern 2.3 auf. Eine jeweilige Seitenwandeinheit 2.1, 2.2 weist wiederum jeweils eine Seitenwand 3, einen sich in Längsrichtung L erstreckenden Obergurt 4.1 und einen sich in Längsrichtung L erstreckenden Untergurt 4.2 auf.

Der Aufbau der Tragstrukturen 2 ist in der Figur 2d im Detail gezeigt. Dabei ist die Seitenwand 3 aus einem Flachmaterial ausgebildet, bei dem durch Aussparungen 5 Strukturabschnitte 6.1 und Strukturabschnitte 6.2 ausgebildet sind. Die Strukturabschnitte 6.1 unterteilen die Seitenwand 3 bzw. die Seitenwandeinheit 2 folglich in Felder. Ferner sind an den Strukturabschnitten 6.1 Strukturpfosten 7 mit Tragelementen 7.1 und die Querstreben 2.3 angeordnet bzw. befestigt, insbesondere verschweißt.

Die Seitenwand 3 ist weiterhin integral mit dem Obergurt 4.1 und dem Untergurt 4.2 ausgebildet. So ist durch das die Seitenwand 3 ausbildende Flachmaterial eine erste Wandung 8.1 und L-förmig von der ersten Wandung 8.1 abgebogen eine zweite Wandung 8.2 des Obergurts 4.1 gebildet. Eine dritte Wandung 8.3 und eine vierte Wandung 8.4 des Obergurts 4.1 sind durch ein weiteres, aus einem L-förmig gebogenen Flachmaterial gebildeten und mit dem die Seitenwand 3 ausbildenden Flachmaterial verschweißten, Element gebildet. In gleicher Weise sind durch das die Seitenwand 3 ausbildende Flachmaterial L-förmig von der Seitenwand 3 abgebogen eine erste Wandung 9.1 und L-förmig von der ersten Wandung 9.1 abgebogen eine zweite Wandung 9.2 des Untergurts 4.2 gebildet. Eine dritte Wandung 9.3 und eine vierte Wandung 9.4 des Untergurts 4.2 sind durch eine L-förmig gebogene Bodeneinheit 10 gebildet. Eine vorbeschriebene Lastaufnahmevorrichtung 30 kann beispielsweise, jedoch nicht näher dargestellt, an einem Obergurt 4.1 oder einem Untergurt 4.2 ausgebildet sein und eine Komponente der Fahrwegvorrichtung 1 tragen. Dabei entspricht beispielsweise die erste Wandung 31.1 der zweiten Wandung 8.2 und die zweite Wandung 31.2 der dritten Wandung 8.3.

Wiederum mit Bezug auf die Figuren 2a bis 2c sind die Längsabschnittsmodule 1.1, 1.2, 1.3 mit mehreren Komponenten der Fahrwegvorrichtung dargestellt. So weist das untere Kopfmodul (Fig. 2a) eine Kammplatte 12, einen Sockel 13, eine Balustrade 16 mit darauf angeordnetem Handlauf 17 und mehrere Führungen 14.1, 14.2, 14.3 für nicht dargestellte Kettenrollen, Stufen-/Palettenrollen und/oder einen Handlauf auf. Entsprechende Führungen 14.1, 14.2, 14.3, ein Sockel 13 und eine Balustrade 16 sind auch in dem Zwischenmodul (Fig.2b) angeordnet. Die Führungen 14.1, 14.2, 14.3 liegen dabei auf den Tragelementen 7.1 auf. Das obere Kopfmodul (Fig. 2c) weist neben den bereits im unteren Kopfmodul und/oder Zwischenmodul vorhandenen Komponenten einen Antrieb 15 zum Antreiben einer Kette und/oder einem Handlaufumlauf auf. Bei der Darstellung des oberen Kopfmoduls ist eine vorgesehene Balustrade 16 nicht dargestellt. Die Kammplatte 12 ist an dem Obergurt 4.1 in nicht dargestellter Weise durch eine Lastaufnahmevorrichtung 30 gehalten.

Die Längsmodule 1.1, 1.2, 1.3 weisen jeweils an den Tragstrukturen 2, bzw. Seitenwandeinheiten 2.1, 2.2, bzw. Seitenwänden 3 im Flachmaterial eingebrachte Referenzpunkte 18 auf, die in Figur 2d dargestellt sind. In den Figuren 2a bis 2c sind die Referenzpunkte 18 von Montagehalterungen 19 überdeckt, die wiederum auf Schlitten 20 befestigt sind. Durch das Aufhängen der Längsabschnitte 1.1, 1.2, 1.3 an den Referenzpunkten 18 ist es ermöglicht, während der Montage immer wieder und bestenfalls ausschließlich bei der Positionierung/Ausrichtung von Komponenten auf die Referenzpunkte 18 Bezug zu nehmen. Die Referenzpunkte 18 sind bei der Fertigung der Seitenwände 3 durch Laserschneiden an dem Flachmaterial ausgebildet, wobei durch für das Laserschneiden typische Genauigkeit alle weiteren an dem Flachmaterial eingebrachten Ausnehmungen oder Ausschnitte exakt gegenüber den Referenzpunkten 18 positioniert sind und insofern ihrerseits als Referenzen bei der Positionierung/Ausrichtung von Komponenten dienen können. Insbesondere gilt dies für erste Ausnehmungen 33.1, vierte Ausnehmungen 33.4 und/oder fünfte Ausnehmungen 33.5, mittels denen eine Kammplatte 12 an dem Obergurt 4.1 befestigt ist. Die Kammplatte 12 kann durch die exakten Referenzen dann mittels der Lastaufnahmevorrichtung 30 positioniert und ausgerichtet werden, ohne dass dazu weitere Hilfsmittel oder Verfahrensschritte notwendig sind. Auch gilt die Eignung zum Positionieren/Ausrichten für die Verbindungsmittel 21 zum Verbinden der Längsabschnittmodule 1.1, 1.2, 1.3 und Schlitze 22 zum Aufnehmen von Komponenten der Fahrwegvorrichtung 1 wie etwa der Tragelemente 7.1. Mittels der Referenzpunkte 18 und insbesondere der Aufhängung der Längsabschnittmodule 1.1, 1.2, 1.3 ist auch eine exakte Ausrichtung der Längsabschnittmodule 1.1, 1.2, 1.3 zueinander bei deren Verbindung miteinander über die Verbindungsmittel 21 ermöglicht.

### Bezugszeichenliste

- 1: Fahrwegvorrichtung
- 1.1: erstes Längsabschnittsmodul (unteres Kopfmodul)
- 1.2: zweites Längsabschnittsmodul (Zwischenmodul)
- 1.3: drittes Längsabschnittsmodul (oberes Kopfmodul)
- 2: Tragstruktur
- 2.1: erste Seitenwandeinheit
- 2.2: zweite Seitenwandeinheit
- 2.3: Querträger
- 4.1: Obergurt
- 4.2: Untergurt
- 5: Aussparung
- 6.1: erster Strukturabschnitt
- 6.2: zweiter Strukturabschnitt
- 7: Strukturpfosten
- 7.1: Tragelement
- 8.1: erste Wandung des Obergurts
- 8.2: zweite Wandung des Obergurts
- 8.3: dritte Wandung des Obergurts
- 8.4: vierte Wandung des Obergurts
- 9.1: erste Wandung des Untergurts
- 9.2: zweite Wandung des Untergurts
- 9.3: dritte Wandung des Untergurts
- 9.4: vierte Wandung des Untergurts
- 10: Bodeneinheit
- 12: Kammplatte
- 13: Sockel
- 14.1: erste Führung
- 14.2: zweite Führung
- 14.3: dritte Führung
- 15: Antrieb
- 16: Balustrade
- 17: Handlauf
- 18: Referenzpunkt
- 19: Montagehalterung
- 20: Schlitten
- 21: Verbindungsmittel
- 22: Schlitz
- 30: Lastaufnahmevorrichtung
- 31: Profil
- 31.1: erste Wandung des Profils
- 31.2: zweite Wandung des Profils
- 32: Verbindungsstück
- 32.1: erster Abschnitt des Verbindungsstücks
- 32.2: zweiter Abschnitt des Verbindungsstücks
- 33.1: erste Ausnehmung
- 33.2: zweite Ausnehmung
- 33.3: dritte Ausnehmung
- 33.4: vierte Ausnehmung
- 33.5: fünfte Ausnehmung34 Verbindungsmittel
- 35: Anschlag
- 35.1: Einkerbung
- L: Längsrichtung
- Q: Querrichtung
- F: Fluchtrichtung

## Patentansprüche

1. Lastaufnahmevorrichtung (30) zur Aufnahme einer Last an einem Profil (31), insbesondere an einem Obergurt (4.1) oder Untergurt (4.2) einer Tragstruktur (2) für eine Fahrwegvorrichtung (1), die Lastaufnahmevorrichtung (30) aufweisend
das Profil (31) mit zumindest einer ersten Wandung (31.1) und einer winkelig, insbesondere rechtwinkelig, mit der ersten Wandung (31.1) verbundenen zweiten Wandung (31.2); und
ein Verbindungsstück (32) mit einem ersten Abschnitt (32.1) und einem zweiten Abschnitt (32.2);
wobei das Profil (31) an der zweiten Wandung (31.2) unmittelbar unterhalb der ersten Wandung (31.1) eine parallel zu der ersten Wandung (31.1) fluchtende erste Ausnehmung (33.1) aufweist;
wobei das Verbindungsstück (32) mit dem ersten Abschnitt (32.1) die erste Ausnehmung (33.1) durchgreift und an der ersten Wandung (31.1) von innerhalb des Profils (31) anliegt;
wobei der erste Abschnitt (32.1) mit der ersten Wandung (31.1) verbindbar ist; und
wobei das Verbindungsstück (32) an dem außerhalb des Profils (31) liegenden zweiten Abschnitt (32.2) eine Lastaufnahme aufweist.

2. Lastaufnahmevorrichtung (30) nach Anspruch 1, wobei die Lastaufnahme als zweite Ausnehmung (33.2), insbesondere als Langloch, ausgebildet ist.

3. Lastaufnahmevorrichtung (30) nach Anspruch 1 oder 2, wobei das Verbindungsstück (32) in dem ersten Abschnitt (32.1) zumindest eine dritte Ausnehmung (33.3) zur Aufnahme von Verbindungsmitteln (34) zum Verbinden des Verbindungsstücks (32) mit der ersten Wandung (31.1) des Profils (31) aufweist, wobei das Profil (31) in der ersten Wandung (31.1) zumindest eine vierte Ausnehmung (33.4) zur Aufnahme der Verbindungsmittel (34) aufweist.

4. Lastaufnahmevorrichtung (30) nach Anspruch 3, wobei die dritte Ausnehmung (33.3) ein Gewinde aufweist.

5. Lastaufnahmevorrichtung (30) nach einem der Ansprüche 2 bis 4, wobei das Profil (31) an der ersten Wandung (31.1) eine an die erste Ausnehmung (33.1) angrenzende fünfte Ausnehmung (33.5) zum Freilegen eines Zugriffsbereichs der zweiten Ausnehmung (33.2) aufweist.

6. Lastaufnahmevorrichtung (30) nach einem der vorhergehenden Ansprüche, wobei das Verbindungsstück (32) einen Anschlag (35) zum Anschlagen an der zweiten Wandung (31.2) von außerhalb des Profils (31) aufweist.

7. Lastaufnahmevorrichtung (30) nach Anspruch 5, wobei der Anschlag (35) als Abwinkelung von dem zweiten Abschnitt (32.2) des Verbindungsstücks (32) ausgebildet ist.

8. Lastaufnahmevorrichtung (30) nach einem der vorhergehenden Ansprüche, wobei zumindest eine aus erste Ausnehmung (33.1), zweiter Ausnehmung (33.2), dritter Ausnehmung (33.3), vierter Ausnehmung (33.4) und/oder fünfter Ausnehmung (33.5) mittels Laserschneiden ausgebildet ist.

9. Profil (31), insbesondere Hohlprofil, für eine Lastaufnahmevorrichtung (30) nach einem der vorhergehenden Ansprüche.

10. Verbindungsstück (32) für eine Lastaufnahmevorrichtung (30) nach einem der Ansprüche 1 bis 8.

11. Tragstruktur (2) für eine Fahrwegvorrichtung (1), insbesondere eine Fahrtreppenvorrichtung, aufweisend
zumindest eine Seitenwandeinheit (2.1, 2.2) mit einen Obergurt (4.1), einen Untergurt (4.2) und einer sich zwischen Obergurt (4.1) und Untergurt (4.2) erstreckenden Seitenwand (3);
wobei zumindest einer aus Obergurt (4.1) und/oder Untergurt (4.2) zum Ausbilden einer Lastaufnahmevorrichtung (30) nach einem der Ansprüche 1 bis 8 als Profil (31) nach Anspruch 9 ausgebildet ist.

12. Tragstruktur (2) nach Anspruch 11, wobei die erste Wandung (31.1) und/oder die zweite Wandung (33.2) einstückig mit der Seitenwand (3) ausgebildet ist/sind, und wobei die erste Ausnehmung (33.1), die vierte Ausnehmung (33.4) und/oder die fünfte Ausnehmung (33.5) mittels Laserschneiden ausgebildet sind.

13. Längsabschnittsmodul (1.1, 1.2, 1.3) einer modulweise zusammenbaubaren Fahrwegvorrichtung (1), insbesondere einer Fahrtreppenvorrichtung, aufweisend eine Tragstruktur (2) nach Anspruch 11 oder 12.

14. Längsabschnittsmodul (1.1, 1.2, 1.3) nach Anspruch 13, ausgebildet als Zwischenmodul zwischen zwei Kopfmodulen.

15. Fahrwegvorrichtung (1), insbesondere Fahrtreppenvorrichtung, aufweisend
eine Tragstruktur (2) nach Anspruch 11 oder 12; und
insbesondere zumindest ein Längsabschnittsmodul (1.1, 1.2, 1.3) nach Anspruch 13 oder 14.
